# EUROPÄISCHE PATENTANMELDUNG

(11) **EP 2 940 162 A1**
(43) Veröffentlichungstag der Anmeldung: **04.11.2015**
(21) Anmeldenummer: 14001537.1
(22) Anmeldetag: 30.04.2014
(51) Int. Cl.: C22B 7/00

(54) **Wiederverwendung von titanbasierten Katalysatoren**

(71) Anmelder: Tropinon Enterprises Ltd., HE314729 Nicosia (CY)
(72) Erfinder: Pley, Dr. Martin, 69117 Memmelsdorf (DE)
(74) Vertreter: Ricker, Mathias

(57) **Zusammenfassung**

Verfahren zur Abtrennung einer Sauerstoff-haltigen Titanverbindung und mindestens einer Sauerstoff-haltigen Verbindung mindestens eines der Elemente Vanadium, Molybdän und Wolfram aus einer Zusammensetzung umfassend eine Verbindung des Titans, Siliziums und / oder Aluminiums, und mindestens eine Verbindung der Elemente Vanadium, Molybdän und Wolfram, umfassend mindestens die Stufen (S1) bis (S3):
(S1) Inkontaktbringen der Zusammensetzung mit wässeriger Base, wobei eine wässerige Masse erhalten wird, welche umfasst:
Eine erste flüssige Fraktion umfassend ein wasserlösliches Material, wobei das wasserlösliche Material mindestens eine Verbindung mindestens eines der Elemente Vanadium, Molybdän und Wolfram umfasst; und
eine erste feste Fraktion, welche ein wasserunlösliches Material umfasst, wobei das wasserunlösliche Material eine Verbindung des Titans und des Siliziums und / oder des Aluminiums umfasst;
(S2) Abtrennen der ersten flüssigen Fraktion von der ersten festen Fraktion;
(S3) Inkontaktbringen der ersten festen Fraktion mit Säure, wobei eine säurehaltige Masse erhalten wird, welche umfasst:
Eine zweite flüssige Fraktion umfassend ein säurelösliches Material, wobei das säurelösliche Material eine Titanverbindung umfasst; und
eine zweite feste Fraktion umfassend ein säureunlösliches Material, wobei das säureunlösliche Material Siliziumdioxid und / oder Aluminiumoxid umfasst.

## Beschreibung

Die folgende Erfindung betrifft ein Verfahren zur Abtrennung von Titanoxid und Vanadium-, Molybdän- und Wolframverbindungen aus SCR-Katalysatoren sowie ein Verfahren zur Wiederverwendung dieser Verbindungen in SCR-Katalysatoren.

Titan-basierte SCR (Selective Catalytic Reduction)-Katalysatoren werden in unterschiedlichen Anwendungen zur Reduzierung von Stickoxidemissionen eingesetzt. Dabei werden im Wesentlichen zwei unterschiedliche Typen von SCR-Katalysatoren verwendet, nämlich Waben- und Plattenkatalysatoren.

Vollextrudierte Wabenkatalysatoren bestehen im Wesentlichen aus einer Mischung von Titan(IV)oxid (ca. 85 Gew.-%), Wolfram(VI)oxid (ca. 10 Gew.-%) und Vanadium(V)oxid (ca. 2 Gew.-%), bezogen auf das Gesamtgewicht der Zusammensetzung. Dieser Typ von SCR-Katalysator wird vorzugsweise zur Stickoxidminderung in Müllverbrennungsanlagen (Low-Dust Konfiguration), in stationären und mobilen Gas- und Dieselmotoren sowie in Gasturbinen eingesetzt. Dieser Katalysatortyp hat einem Marktanteil von ca. 90 % bezogen die beiden Typen von SCR-Katalysatoren.

Plattenkatalysatoren bestehen aus einem metallischen Trägersubstrat, vorzugsweise Streckmetall (ca. 50 Gew.-%), und einer Beschichtung aus Titan(IV)oxid (ca. 45 Gew.-%), Molybdän(VI)oxid (ca. 2,5 Gew.-%) und Vanadium(V)oxid (ca. 1 Gew.-%), bezogen auf das Gesamtgewicht des Katalysators. Dieser Katalysator wird vor allem zur Stickoxidminderung in Kohlekraftwerken und Müllverbrennungen in der High-Dust Konfiguration sowie bei der Verbrennung von Biomasse eingesetzt. Durch den Aufbau dieser Katalysatoren eignet sich dieser Katalysator besonders gut für Anwendungen mit hohen Staubfrachten.

Als weitere Komponenten können die Zusammensetzungen Silizium- und / oder Aluminiumverbindungen enthalten, vorzugsweise Siliziumverbindungen.

Die Lebenserwartung von SCR-Katalysatoren hängt im Wesentlichen von der Art des verwendeten Brenn- oder Treibstoffs sowie dem Staubgehalt im Abgas und der Abgastemperatur zusammen. Die typische Anwendungsdauer im Bereich von Kohlekraftwerken liegt bei 16.000-24.000 Betriebsstunden, jene in Schiffsdieseln bei ca. 16.000 Betriebsstunden und jene in Gasturbinen bei bis zu 50.000 Betriebsstunden.

Nach der jeweiligen Anwendungsdauer werden die Katalysatoren entweder entsorgt oder durch ein chemisches Verfahren regeneriert.

Im Falle der Entsorgung werden Wabenkatalysatoren kostenpflichtig in einer Sondermülldeponie endgelagert. Hier können für den Betreiber Entsorgungskosten von bis zu 250,00 EURO pro Kubikmeter Katalysator anfallen. Plattenkatalysatoren können auf Grund des hohen Anteils an Edelstahl (Trägersubstrat) im Bereich der Stahlerzeugung eingeschmolzen werden.

Im Falle der Regenerierung von Wabenkatalysatoren werden diese zunächst von Anhaftungen mittels eines physikalischen Verfahrens gereinigt, vorzugsweise Ultraschall oder Druckluft, und anschließend mit einer Vanadium-haltigen Lösung nachbehandelt. Hier kann die Aktivität wieder auf ca. 90 % der ursprünglichen Aktivität erhöht werden. Die Deaktivierung dieser Regenerierten Katalysatoren ist jedoch merklich höher als jene von neuen Katalysatoren. Die Kosten für regenerierte SCR Katalysatoren liegen bei ca. 60 % der Kosten neuer Katalysatoren. Ein Verfahren zur Regeneration ist in EP 0 353 467 beschrieben.

Der aktuelle Weltmarkt für Titandioxid-basierte Wabenkatalysatoren umfasst im "nonautomotive" Bereich ca. 200.000 m³ pro Jahr, jener von SCR-Plattenkatalysatoren ca. 30.000 m³ pro Jahr. Vor allem durch neue Emissionsanforderungen in der VR China wird sich alleine der dortige Markt für SCR-Plattenkatalysatoren bis zum Jahr 2017 auf ca. 90.000 m³ pro Jahr steigern.

Im Bereich der Automobilindustrie in der VR China werden fortan für alle neuen Lastkraftwagen auch sehr strikte Anforderungen an die Emissionen von Stickoxiden gestellt. Dies hat wie bereits in Europa und den USA zur Folge, dass in Lastkraftwagen ebenfalls SCR-Wabenkatalysatoren eingesetzt werden müssen. Der Absatz von Lastkraftwagen in der VR China betrug im Jahr 2011 ca. 3,5 Mio. Fahrzeuge. Auch hieraus ergibt sich ein erheblicher Mehrbedarf in den kommenden Jahren. Dies hat die Folge, dass gebrauchte Katalysatoren nach einer bestimmten Betriebsdauer entsorgt werden müssen.

Der stark anwachsende Bedarf im Bereich von Titandioxid-basierten SCR-Katalysatoren hat in den vergangenen Jahren zu einem Anstieg der Rohstoffpreise geführt, da die Kapazitäten der Produzenten von insbesondere Titandioxid in der Anatas-Modifikation begrenzt sind. Hier ist es zu erwarten, dass es in den kommenden Jahren zu einem Rohstoffengpass kommen wird.

Aufgabe des hier vorgestellten neuen Verfahrens ist es, aus gebrauchten SCR-Katalysatoren den Rohstoff Titandioxid und gegebenenfalls auch Vanadium-, Molybdän-und Wolframverbindungen zurückzugewinnen und für die Herstellung neuer Katalysatoren wiederzuverwenden.

Diese Aufgabe wird gelöst wie in den unabhängigen Patentansprüchen definiert. Vorteilhafte Ausführungsformen sind in den abhängigen Patentansprüchen definiert.

Vor Durchführung des eigentlichen erfindungsgemäßen Verfahrens können die gebrauchten SCR-Katalysatoren in einem ersten Schritt mechanisch von anhaftenden Stoffen gereinigt werden [Stufe (S0.1)].

In einem zweiten Schritt können die Katalysatoren den üblicherweise vorhandenen metallischen Gehäusen oder Halterungen entnommen werden [Stufe (S0.2)].

Im Falle der Plattenkatalysatoren kann noch eine physikalische Trennung der keramischen Beschichtung vom metallischen Trägersubstrat erfolgen.

Anschließend können die SCR-Katalysatoren bzw. die bei Plattenkatalysatoren vom metallischen Trägersubstrat getrennte keramische Beschichtungsmasse, mechanisch zu einem Pulver bzw. zu kleinen Stücken zerkleinert werden [Stufe (S0.3)].

Zur Entfernung von leicht löslichen Bestandteilen oder sonstig anhaftenden Verunreinigungen kann die die zerkleinerte keramische Masse mit Wasser gewaschen werden, vorzugsweise einer wässrigen Säure mit einem pH-Wert zwischen 1 und 6,8 [Stufe (S0.4)].

Die zerkleinerte keramische Masse kann auch mit Wasser, vorzugsweise einer wässrigen Säure mit einem pH-Wert zwischen 1 und 6,8, in Suspension behandelt werden. Anschließend können die nicht-löslichen Bestandteile der Suspension von dem wässrigen Medium getrennt werden, vorzugsweise durch Filtration, Zentrifugieren, Sedimentieren und Abgießen des Überstands. Der abgetrennte Rückstand wird bei Bedarf mit Wasser gewaschen.

Anschließend wird erfindungsgemäß die zerkleinerte Masse vorzugsweise mit einer wässrigen Lösung von Ammoniak bzw. einer Amin-haltigen wässrigen Lösung im Rückfluss erhitzt [Stufe (S1)]. Es können primäre, sekundäre und tertiäre Amine eingesetzt werden, vorzugsweise Amine mit 1 bis 30 Kohlenstoffatomen. Dabei werden Mo / V / W oder Verbindungen davon als Amine in der wässrigen Lösung als Molybdate / Vanadate / Wolframate gelöst. Zurück bleiben TiO₂ und SiO₂ und / oder Al₂O₃.

Die erhaltene Suspension kann abgekühlt und der verbleibende Rückstand von der flüssigen Fraktion abgetrennt werden [Stufe (S2)]. Dieser Rückstand kann wiederum mit Wasser gewaschen werden.

Die abgetrennte flüssige Fraktion kann anschließend durch teilweises Entfernen des Lösungsmittels aufkonzentriert werden. Die weitere Aufarbeitung zur Gewinnung von reinem (NH₄)₆Mo₇O₂₄ und (NH₄)₁₀W₁₂O₄₁ ist in den Patentschriften EP 0 555 128 A1, WO 1999/058732, EP 0 477 450 B1 für die Trennung Mo / V in petrochemischen Katalysatoren beschrieben oder kann analog zu diesen Verfahren durchgeführt werden [Stufen (S4), (S4.1), (S4.2)].

Der Rückstand aus Stufe (S2) wird anschließend in Schwefelsäure erhitzt und kann mehrere Stunden unter Rühren dort belassen werden. Dabei löst sich TiO₂ als Ti(SO₄)₂ und TiOSO₄. SiO2 und / oder Al₂O₃bleibt/ / bleiben als unlöslicher Rückstand zurück [Stufe (S3)].

Der Rückstand wird von der stark sauren Lösung getrennt [Stufe (S5)]. Gegebenenfalls kann die Lösung vorher leicht mit Wasser verdünnt werden.

Die klare, schwefelsaure Lösung wird anschließend so lange mit Wasser verdünnt und gegebenenfalls erhitzt, bis ein amorpher Feststoff ausfällt, der "meta-Titansäure Ti(OH)₂O" umfasst oder aus dieser Säure besteht [Stufe (S6)].

Dieser Feststoff wird isoliert, vorzugsweise durch übliche Verfahren wie Filtration oder Zentrifugation [Stufe (S7)]. Der Feststoff kann mit Wasser gewaschen werden, um Säurerückstände zu entfernen, und kann gegebenenfalls getrocknet werden.

Die BET-Oberfläche dieses Produkts liegt bei ca. 350 m²/g, was für Low-SO2-Conversion relevant ist. Dieses Produkt kann somit direkt in die Herstellung von Katalysatoren eingesetzt werden, was außerordentlich vorteilhaft ist.

Alternativ dazu kann dieser gewonnene amorphe Feststoff zur weiteren Aufarbeitung erhitzt werden, vorzugsweise auf Temperaturen < 1.000 °C, mehr bevorzugt < 650 °C, vorzugsweise im Drehrohrofen. Dabei bildet sich kristallines TiO₂ im Anatas-Typ [Stufe (S8)].

Die erfindungsgemäß gewonnenen Rohstoffe TiO₂, (NH₄)₆Mo₇O₂₄ und (NH₄)₁₀W₁₂O₄₁ lassen sich wieder in die Herstellung von Titandioxid-basierten SCR-Katalysatoren einsetzen. Abgetrennte Vanadiumverbindungen können gleichfalls wiederverwendet werden.

## Patentansprüche

1. Verfahren zur Abtrennung einer Sauerstoff-haltigen Titanverbindung und mindestens einer Sauerstoff-haltigen Verbindung mindestens eines der Elemente Vanadium, Molybdän und Wolfram aus einer Zusammensetzung umfassend eine Verbindung des Titans, Siliziums und / oder Aluminiums, und mindestens eine Verbindung der Elemente Vanadium, Molybdän und Wolfram, umfassend mindestens die Stufen (S1) bis (S3):
(S1) Inkontaktbringen der Zusammensetzung mit wässeriger Base, wobei eine wässerige Masse erhalten wird, welche umfasst:
Eine erste flüssige Fraktion umfassend ein wasserlösliches Material, wobei das wasserlösliche Material mindestens eine Verbindung mindestens eines der Elemente Vanadium, Molybdän und Wolfram umfasst; und
eine erste feste Fraktion, welche ein wasserunlösliches Material umfasst, wobei das wasserunlösliche Material eine Verbindung des Titans und des Siliziums und / oder des Aluminiums umfasst;
(S2) Abtrennen der ersten flüssigen Fraktion von der ersten festen Fraktion;
(S3) Inkontaktbringen der ersten festen Fraktion mit Säure, wobei eine säurehaltige Masse erhalten wird, welche umfasst:
Eine zweite flüssige Fraktion umfassend ein säurelösliches Material, wobei das säurelösliche Material eine Titanverbindung umfasst; und
eine zweite feste Fraktion umfassend ein säureunlösliches Material, wobei das säureunlösliche Material Siliziumdioxid und / oder Aluminiumoxid umfasst.

2. Verfahren nach Anspruch 1, umfassend mindestens eine weitere Stufe (S4):
(S4) aus Stufe (S2), Isolieren des wasserlöslichen Materials aus der ersten flüssigen Fraktion.

3. Verfahren nach Anspruch 2, weiter umfassend mindestens die Stufen (S4.1) oder step (S4.2):
(S4.1) falls das wasserlösliche Material eine Vanadium- und Molybdänverbindung umfasst, Abtrennen der Molybdänverbindung von der Vanadiumverbindung;
(S4.2) falls das wasserlösliche Material eine Vanadium- und Wolframverbindung umfasst, Abtrennen der der Wolframverbindung von der Vanadiumverbindung.

4. Verfahren nach einem der vorstehenden Ansprüche, weiter umfassend mindestens die Stufe (S5):
(S5) aus Stufe (S3), Abtrennen der zweiten flüssigen Fraktion von der zweiten festen Fraktion.

5. Verfahren nach Anspruch 4, weiter umfassend mindestens die Stufen (S6) bis (S7):
(S6) Verdünnen und optional Erhitzen der zweiten flüssigen Fraktion aus Stufe (S5) mit Wasser solange bis eine dritte feste Fraktion in Form eines Niederschlags entsteht, wobei die dritte feste Fraktion eine Titanverbindung umfasst, vorzugsweise in Form von Ti(OH)₂O;
(S7) Isolieren der dritten festen Fraktion aus Stufe (S6).

6. Verfahren nach einem der vorstehenden Ansprüche, wobei die in Stufe (S1) verwendete Base ausgewählt ist aus der Gruppe bestehend aus: Alkalimetallhydroxid, Erdalkalimetallhydroxid, Alkalimetallhydrogencarbonat, Erdalkalimetallhydrogencarbonat, Alkalimetallcarbonat, Erdalkalimetallcarbonat, Ammoniak, Amin, quaternäre Ammoniumbasen.

7. Verfahren nach einem der vorstehenden Ansprüche, wobei die in Stufe (S1) verwendete Base Ammoniak ist.

8. Verfahren nach einem der vorstehenden Ansprüche, wobei Stufe (S1) bei einer Temperatur im Bereich von 30 °C bis zur Rückflusstemperatur der wässerigen Base durchgeführt wird.

9. Verfahren nach einem der vorstehenden Ansprüche, wobei die in Stufe (S3) verwendete Säure ausgewählt ist aus der Gruppe bestehend aus: Chlorwasserstoffsäure, Bromwasserstoffsäure, Salpetersäure, Schwefelsäure, Phosphorsäure, Methansulfonsäure, p-Toluolsulfonsäure, Essigsäure, Trifluoressigsäure, Chloressigsäure, Benzoesäure.

10. Verfahren nach einem der vorstehenden Ansprüche, wobei die in Stufe (S3) verwendete Säure Schwefelsäure ist.

11. Verfahren nach einem der vorstehenden Ansprüche, wobei Stufe (S3) bei einer Temperatur im Bereich von 30 °C bis zur Rückflusstemperatur der Säure durchgeführt wird.

12. Verfahren nach einem der vorstehenden Ansprüche, weiter umfassend mindestens die Stufe (S8):
(S8) Erhitzen der dritten festen Fraktion aus Stufe (S7) auf eine Temperatur im Bereich von 100 bis 1.000 °C, wobei eine Verbindung erhalten wird, welche TiO₂ umfasst, vorzugsweise Anatas.

13. Verfahren nach einem der vorstehenden Ansprüche, wobei die erste und / oder zweite und / oder dritte feste Fraktion mit Wasser gewaschen wird / werden.

14. Verfahren nach einem der vorstehenden Ansprüche, weiter umfassend vor Stufe (S1) mindestens eine der folgenden Stufen (S0.1) bis (S0.4):
(S0.1) mechanisches Entfernen von Verunreinigungen von der Zusammensetzung, vorzugsweise durch Ultraschall oder Gas unter Druck, vorzugsweise Druckluft;
(S0.2) Entfernen der Zusammensetzung aus einer Katalysatorvorrichtung;
(S0.3) Zerkleinern der Zusammensetzung;
(S0.4) Waschen des in Stufe (S0.3) erhaltenen Produktes, vorzugsweise Waschen mit Wasser.

15. Verfahren zur Herstellung eines Katalysators, umfassend mindestens einen der Reaktionsschritte wie in einem der Ansprüche 1 bis 14 definiert, und mindestens eine der folgenden Stufen (M1) bis (M12):
(M1) Aufbringen des ersten wasserlöslichen Materials aus Stufe (S4), (S4.1) oder (S4.2) auf einen Träger;
(M2) Aufbringen der dritten festen Fraktion aus Stufe (S7) auf einen Träger;
(M3) Aufbringen der Verbindung aus Stufe (S8) auf einen Träger;
(M4) Aufbringen einer Mischung von Verbindungen umfassend mindestens eine Verbindung des Titans, Vanadiums, Molybdäns, Wolframs, Siliziums und / oder Aluminiums, und des ersten wasserlöslichen Materials aus Stufe (S4), (S4.1) oder (S4.2) auf einen Träger;
(M5) Aufbringen einer Mischung von Verbindungen umfassend mindestens eine Verbindung des Titans, Vanadiums, Molybdäns, Wolframs, Siliziums und / oder Aluminiums, und der dritten festen Fraktion aus Stufe (S7) auf einen Träger;
(M6) Aufbringen einer Mischung von Verbindungen umfassend mindestens eine Verbindung des Titans, Vanadiums, Molybdäns, Wolframs, Siliziums und / oder Aluminiums, und der Verbindung aus Stufe (S8) auf einen Träger;
(M7) Extrudieren des ersten wasserlöslichen Materials aus Stufe (S4), (S4.1) oder (S4.2);
(M8) Extrudieren der dritten festen Fraktion aus Stufe (S7);
(M9) Extrudieren der Verbindung aus Stufe (S8);
(M10) Extrudieren einer Mischung von Verbindungen umfassend mindestens eine Verbindung des Titans, Vanadiums, Molybdäns, Wolframs, Siliziums und / oder Aluminiums, und des ersten wasserlöslichen Materials aus Stufe (S4), (S4.1) oder (S4.2);
(M11) Extrudieren einer Mischung von Verbindungen umfassend mindestens eine Verbindung des Titans, Vanadiums, Molybdäns, Wolframs, Siliziums und / oder Aluminiums, und der dritten festen Fraktion aus Stufe (S7);
(M12) Extrudieren einer Mischung von Verbindungen umfassend mindestens eine Verbindung des Titans, Vanadiums, Molybdäns, Wolframs, Siliziums und / oder Aluminiums, und der Verbindung aus Stufe (S8).
